Europäisches Patentamt

European Patent Office

Office européen des brevets

(11) Veröffentlichungsnummer: **0 076 389**
**A2**

(12) # EUROPÄISCHE PATENTANMELDUNG

(21) Anmeldenummer: **82108133.8**

(22) Anmeldetag: **03.09.82**

(51) Int. Cl.³: **B 23 D 35/00**

(30) Priorität: **06.10.81 DE 3139676**

(43) Veröffentlichungstag der Anmeldung:
**13.04.83 Patentblatt 83/15**

(84) Benannte Vertragsstaaten:
**BE FR IT LU NL**

(71) Anmelder: **Fried. Krupp Gesellschaft mit beschränkter
Haftung
Altendorfer Strasse 103
D-4300 Essen 1(DE)**

(72) Erfinder: **Menzel, Wilhelm
Barthel-Bruyn-Strasse 19
D-4300 Essen 1(DE)**

(72) Erfinder: **Weith, Werner
Brahmsstrasse 46
D-5628 Heiligenhaus(DE)**

(54) **Schneidmesser.**

(57) Insbesondere zur Erzielung einer exakten Einstellung des Schneidspaltes wird ein Schneidmesser vorgeschlagen, bei dem der im Prinzip nach dem Stand der Technik bekannte, im Querschnitt rhombische Schneideinsatz (2) in mehrere Schneidelemente (1) unterteilt ist, deren aneinanderliegende Flächen (3) schräg zur Längsmittelachse des Schneidmessers verlaufen, daß die Schräglage des Schneideinsatzes (2) in bezug auf die Querschnittslängsachse (13) des Schneidmessers einstellbar ist und daß der Schneideinsatz (2) bzw. dessen Schneidelemente (1) über eine auf eine Spannleiste (8) wirkende Spannschraube (5) eingespannt ist.

FIG. 1a

FIG. 1b

EP 0 076 389 A2

0076389

FRIED. KRUPP GESELLSCHAFT MIT BESCHRÄNKTER HAFTUNG
in Essen


Schneidmesser


Die vorliegende Erfindung betrifft ein Schneidmesser, das aus einem Stahl-Grundkörper und einem leistenförmig ausgebildeten, austauschbaren Hartmetall- oder Keramik-Schneideinsatz besteht, der in bezug auf die Querschnittslängsachse des Schneidmessers schräg eingespannt ist. Schneidmesser dieser Art werden z.B. zum Schneiden von Kunststoffbändern oder Blechen benutzt.


Es sind Schneidmesser mit im Querschnitt rechteckförmigen Schneidleisten, die mittels Spannelementen befestigt werden, ebenso bekannt wie im Querschnitt rhombenförmige Ausbildungen, die mittels Einlegekeilen festgeklemmt werden. Nachteiligerweise ist die Länge des Schneideinsatzes wegen der ansonsten drohenden Bruchgefahr auf ein verhältnismäßig niedriges Maß begrenzt, weshalb man auch schon dazu übergegangen ist, die im Querschnitt rechteckförmigen Schneidleisten in mehrere Stücke zu unterteilen. Hierbei ergab sich allerdings der Nachteil, daß die Schneideinsatzteilstücke an den aneinanderliegenden Grenzflächen einem starken Verschleiß unterworfen waren. Wird dazu mit engen Schneidspalten gearbeitet, wenn z.B. dem Schneidmesser als Stator ein Rotor gegenübersteht, so ergibt sich nach kurzem Gebrauch oder durch mechanisch oder thermisch bedingte Spannungen eine unerwünschte Veränderung des Schneidspaltes, die ein umständliches Nachstellen des Schneideinsatzes oder gar ein Auswechseln erfordert.

Bei langen Messern, wie sie beispielsweise in der Metallverarbeitung oder beim Schneiden von Papierbahnen eingesetzt werden, ist demzufolge ein Arbeiten mit engen Schneidspalten nicht möglich, es sei denn, man macht Abstriche hinsichtlich der Qualität des Schnittes.

Der Erfindung liegt die Aufgabe zugrunde, ein Schneidmesser zu schaffen, das eine exakte Einstellung des Schneidspaltes bei Vermeidung der obengenannten Nachteile erlaubt.

Die Aufgabe wird durch ein Schneidmesser gelöst, bei dem ein im Prinzip nach dem Stand der Technik bekannter, austauschbarer rhombischer Schneideinsatz in mehrere Schneidelemente unterteilt ist, deren aneinanderliegende Flächen schräg zur Längsmittelachse des Schneidmessers verlaufen, bei dem ferner die in bezug auf die Querschnittslängsachse des Schneidmessers schräge Lage der Schneidelemente einstellbar ist und daß die Schneidelemente über eine auf eine Spannleiste wirkende Spannschraube eingespannt sind.

Nach einer weiteren Ausgestaltung der Erfindung sind die aneinanderliegenden Flächen um 1 bis $10^{\circ}$ abgeschrägt, wodurch der Verschleiß an den Kanten der aneinanderliegenden Flächen der einzelnen Schneidelemente erheblich vermindert werden kann. Darüber hinaus gewährleistet die Abschrägung einen besseren Zusammenhalt der Schneidelemente im Schneidmesser.

Die Schräglage jedes Schneidelementes ist über Keile oder Exzenter auf 30 bis $60^{\circ}$ in bezug auf die Querschnittslängsachse des Schneidmessers einstellbar, wodurch eine optimale Schneidfähigkeit des Schneidmessers erzielt wird. Es versteht sich von selbst, daß mit der vorgegebenen Schräglage des Schneideinsatzes zweckmäßigerweise die an die Schneidkante des Schneidelementes angrenzenden Flächen so abgeschrägt sind, daß sie möglichst bündig mit dem Schneidmessergrundkörper abschließen.

Vorteilhafterweise ist der Schneideinsatz bzw. sind dessen Schneidelemente über eine Stellschraube in Richtung der Querschnittslängsachse des Schneideinsatzes verstellbar, so daß Veränderungen des Schneidspaltes, die etwa durch auf Spannungen des Grundkörpers zurückgehende Verwerfungen bedingt sind, ohne Austausch des Schneidmessers ausgeglichen werden können.

Schließlich dient eine sich über die gesamte Länge des Schneideinsatzes erstreckende und diesem hinterlegte Stabilisierungsleiste mit hohem Elastizitätsmodul zur weiteren Festigung. Als bevorzugtes Material eignet sich hierzu Hartmetall z.B. auf WC-Co-Basis, mit Co-Gehalten von 0.01 bis 10 Gew.-% und einer WC-Korngröße von 4 bis 10 $\mu$m. Die Stabilisierungsleiste kann als Festanschlag oder, nach einer weiteren Ausgestaltung des Erfindungsgedankens, über die bereits erwähnte Stellschraube beweglich angeordnet sein und ermöglicht so ein leichtes Nachschleifen der Schneidelemente und verhindert im Arbeitseinsatz die Durchbiegung des Schneideinsatzes.

Ausführungsbeispiele der Erfindung sind in den Zeichnungen dargestellt. Es zeigen

Fig. 1a, b    je einen Schnitt durch ein Schneidelement
              des Schneideinsatzes und

Fig. 2, 3     je einen Querschnitt durch ein Schneidmesser mit eingespanntem Schneidelement.

Das in Fig. 1a im Längsschnitt dargestellte Schneidelement 1 des Schneideinsatzes 2 ist parallelogrammartig ausgebildet, wobei die Abschrägung der Flächen 3, die mit den jeweiligen benachbarten Flächen der beidseitig angeordneten Schneidelemente zur Anlage kommen, 5° beträgt. Jedes der Schneidelemente 1 besitzt zudem Lochbohrungen 4, 4' zur Aufnahme einer Spannschraube 5.

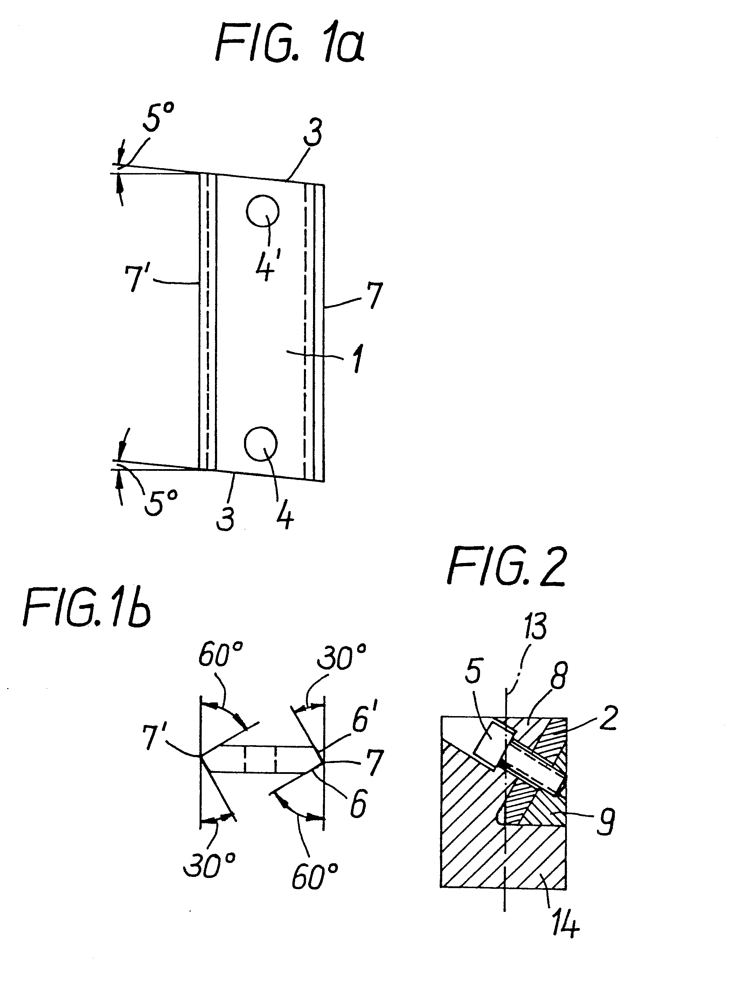

Aus Fig. 1b, die einen Querschnitt des Schneidelementes 1 entsprechend Fig. 1a zeigt, ist die rhombenartige Ausbildung mit den an der Schneidkante 7 angrenzenden Flächen 6, 6' ersichtlich, die mit der Vertikalen zur Schneidkante 7 des Schneidelementes einen Winkel von 30 bzw. 60° bilden. Jedes Schneidelement 1 und damit auch der aus mehreren aneinanderliegenden Schneidelementen bestehende Schneideinsatz 2 ist mit zwei Schneidkanten 7, 7' ausgestattet, so daß bei Verschleiß einer Schneidkante ein Weiterverwenden der Schneidelemente 1 nach deren Wenden möglich ist.

Fig. 2 zeigt ein im wesentlichen aus Grundkörper 14 und Schneidelementen 1 bestehendes Schneidmesser. Als Spannelement dient eine Spannschraube 5, die über eine Spannleiste 8 das Schneidelement 1 festklemmt. Die Spannleiste 8 ermöglicht zudem in Verbindung mit der keilförmigen Aufnahmeleiste 9 die Einstellung der Schräglage des Schneidelementes 2 in bezug auf die Querschnittslängsachse 13 des Schneidmessers.

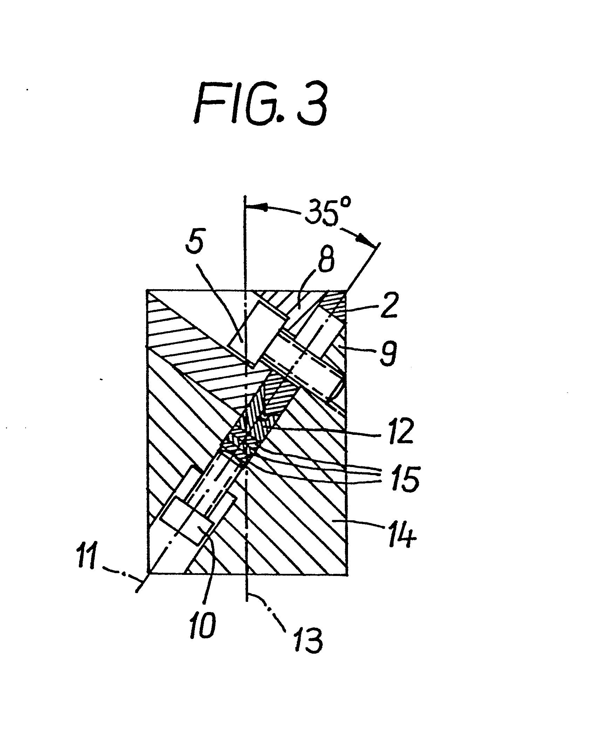

In Fig. 3 ist eine weitere Ausführungsform des Schneidmessers dargestellt, die sich von dem vorbeschriebenen insbesondere dadurch unterscheidet, daß sie zur Nachstellung des Schneideinsatzes 2 bzw. des Schneidelementes 1 eine Stellschraube 10 besitzt. Die Stellschraube 10 ermöglicht über ein entsprechendes Gewinde im Grundkörper 14 ein Nachstellen des Schneideinsatzes 2 bzw. der Schneidelemente 1 in Richtung von dessen Querschnittslängsachse 11. Neben der dem Schneideinsatz 2 bzw. dem jeweiligen Schneidelement 1 angepaßten Druckleiste 16 besitzt das Schneidmesser je nach Bedarf noch eine oder mehrere Stabilisierungsleisten 15. Das dargestellte Schneidelement 1 ist, ebenso wie das vorbeschriebene Ausführungsbeispiel, unter einem Winkel von $35^{\circ}$ in bezug auf die Querschnittslängsachse des Schneidmessers angeordnet.

Der Schneideinsatz 2 bzw. dessen Schneidelemente 1 können jeweils aus einem Hartmetall-Vollkörper, aus einem mit Hartmetall beschichteten Körper oder aus einem Körper bestehen, der in der Schneidkantenumgebung einen Hartmetallaufsatz trägt. Statt des Hartmetalls kann auch Keramik oder ein anderes verschleißfestes Material verwendet werden.

Ansprüche :

1. Schneidmesser, bestehend aus einem Stahl-Grundkörper und einem leistenförmig ausgebildeten, austauschbaren Hartmetall- oder Keramik-Schneideinsatz, der in bezug auf die Querschnittslängsachse des Schneidmessers schräg eingespannt ist, d a d u r c h  g e k e n n - z e i c h n e t,  daß der im Prinzip nach dem Stand der Technik bekannte, im Querschnitt rhombische Schneideinsatz (2) in mehrere Schneidelemente (1) unterteilt ist, deren aneinanderliegende Flächen (3) schräg zur Längsmittelachse des Schneidmessers verlaufen, daß die Schräglage des Schneideinsatzes (2) in bezug auf die Querschnittslängsachse (13) des Schneidmessers einstellbar ist und daß der Schneideinsatz (2) bzw. dessen Schneidelemente (1) über eine auf eine Spannleiste (8) wirkende Spannschraube (5) eingespannt ist.

2. Schneidmesser nach Anspruch 1, dadurch gekennzeichnet, daß die aneinanderliegenden Flächen (3) der in Aufsicht parallelogrammförmig ausgebildeten Schneidelemente (1) um 1 bis $10^O$ abgeschrägt sind.

3. Schneidmesser nach Anspruch 1, dadurch gekennzeichnet, daß die Schneidelemente (1) in Richtung ihrer Querschnittslängsachse (11) über eine oder mehrere Stellschrauben (10) verstellbar sind.

4. Schneidmesser nach Anspruch 1, dadurch gekennzeichnet, daß die Schräglage jedes Schneidelementes (1) über eine keilförmige Aufnahmeleiste (9) oder einen Exzenter einstellbar ist.

5. Schneidmesser nach Anspruch 1, gekennzeichnet durch eine Schräglage des Schneidelementes (1), dessen Querschnittslängsachse (11) mit der Querschnittslängsachse (13) des Schneidmessers einen Winkel von 30 bis 60$^{\circ}$ bildet.

6. Schneidmesser nach Anspruch 1, dadurch gekennzeichnet, daß über der gesamten Länge des Schneideinsatzes (2) eine Stabilisierungsleiste (15) mit hohem Elastizitätsmodul hinterlegt ist.

7. Schneidmesser nach Anspruch 6, gekennzeichnet durch eine Stabilisierungsleiste (15) aus Hartmetall.

8. Schneidmesser nach Anspruch 7, gekennzeichnet durch die Verwendung eines Hartmetalles auf WC-Co-Basis, mit Co-Gehalten von 0.01 bis 10 Gew.-% und einer WC-Korngröße von 4 bis 10 $\mu$m.

0076389

FIG. 1a

FIG.1b

FIG.2

0076389

# FIG. 3